# EUROPEAN PATENT APPLICATION

(11) **EP 4 345 798 A1**
(43) Date of publication of application: **03.04.2024**
(21) Application number: 22198466.9
(22) Date of filing: 28.09.2022
(51) Int. Cl.: G09B 23/28

(54) **ULTRASOUND GUIDED PERCUTANEOUS SURGERY MANNEQUIN**

(71) Applicant: Hands-on Plus, 7340 Colfontaine (BE)
(72) Inventor: MOUNGONDO, Fabian, 7340 Colfontaine (BE); DEVAUX, Nancy, 7340 Colfontaine (BE); SCHUIND, Frédéric, 1801 Mont-Pèlerin (CH)
(74) Representative: reuteler & cie SA

(57) **Abstract**

A mannequin for ultrasound guided surgical training, comprising an artificial bone structure comprising a surface portion reflecting ultrasound waves, artificial tissues comprising any one or more of artificial ligaments, artificial tendons, artificial nerves, artificial blood vessels formed of a material having a partial transparency and partial reflectance to ultrasound waves, and anechoic material surrounding said artificial tissues and artificial bone structure, and an artificial skin formed of an elastomeric layer of material enveloping the anechoic medium.

## Description

### Field of the invention

This invention relates to a mannequin device for training medical practitioners in ultrasound guided percutaneous surgery procedures.

### Background of the invention

Ultrasound-guided (or sonography-guided) medical procedures allow minimally invasive percutaneous treatments like guided injections of various drugs and medications (including saline in hydrodissection procedures), needling (multiple punctures of some internal tissue, usually a degenerated tendon), cutting tissues like the transverse carpal ligament in carpal tunnel syndrome, the annular pulley in trigger finger, the chord of Dupuytren, a degenerated tendon in for example lateral epicondylitis, or retrieving some foreign or biological body.

In ultrasound-guided techniques, the user needs to hold with one hand the sonography probe and with the other to manipulate the instrument, making sure that it is maintained throughout the procedure within the visibility volume of the sonograph, and relatively parallel to the plane of the probe, so that the instrument is always well visible.

Like many new minimally-invasive procedures in medicine, practical teaching of ultrasound-guided medicine is difficult. Appropriate and validated trainings for acquiring and using practical skills are needed before using the techniques in patients. The assistant can learn by watching a practitioner perform such medical act, but watching cannot replace hands-on practical exercises. The user can train on animal pieces or on cadaveric specimens. The animal pieces do not replicate exactly the human anatomy, and the mechanical properties of the animal tissues are quite different, making this pedagogic experience frequently quite limited. Cadaveric specimens are scarce, and if available are frequently desiccated due to the conservation treatments which affect their echogenicity. In addition, pathological conditions like thickening of digital pulleys of trigger fingers are usually not present. Virtual reality systems may be considered for training various surgical procedures like ultrasound-guided techniques, however, to be sufficiently pedagogic, these system need sophisticated haptic return for the student to feel the simulated resistance of the tissues to the instrument, which makes such systems very complex and costly to implement.

Physical models of the human body or of parts of the human body, also known as mannequins, are used for training in the medical field. Mannequins representing the human normal or pathological anatomy may present for instance coloured tissues of complex geometry, and additive manufacturing facilitates the production of models which may include unique pathological abnormalities. Mannequins are known for training minimally invasive percutaneous procedures, such as for instance practicing venous puncture. In conventional models, although the skin may be simulated reasonably well for haptic feedback to train for vein localization and puncture, many other anatomical components are not replicated or configured optimally to allow specifically training complex ultrasound guided percutaneous procedures, such as carpal tunnel syndrome treatment, in a realistic manner.

More generally, conventional mannequins are not adapted for many complex sonography and simulated sonoguided medical acts.

### Summary of the invention

It is an object of the invention to provide a device for training medical practitioners in ultrasound-guided percutaneous surgery procedures that accurately replicates real conditions.

It is advantageous to provide a device for training medical practitioners in ultrasound guided percutaneous surgery procedures that is economical to implement and use.

It is advantageous to provide a device for training medical practitioners in ultrasound guided percutaneous surgery procedures that allows to accurately replicate various pathological conditions.

It is advantageous to provide a device for training medical practitioners in ultrasound guided percutaneous surgery procedures that is reliable.

It is advantageous to provide a device for training medical practitioners in ultrasound guided percutaneous surgery procedures that is ecologically friendly, for instance using recyclable or biodegradable materials.

It is advantageous to provide a device for training medical practitioners in ultrasound guided percutaneous surgery procedures that is stable and has a long shelf life.

For certain applications, it is an object of the invention to provide a device for training medical practitioners in ultrasound guided percutaneous surgery of the hand, for instance for the treatment of carpal tunnel syndrome and trigger finger, that accurately replicates real conditions.

Objects of this invention have been achieved by providing the percutaneous surgery training mannequin according to claim 1.

According to the invention, the mannequin model replicates with high fidelity a region of human anatomy of interest as well as the physical and echogenic characteristics of each tissue of interest. Such model may replicate healthy structures and tissues as well as tissues presenting abnormal shape, volume, mechanical properties or echogenicity, configured to simulate diseases or the presence of foreign bodies or tumors.

Disclosed herein is a mannequin for ultrasound-guided surgical training, comprising an artificial bone structure comprising a surface portion reflecting ultrasound waves, artificial tissues comprising any one or more of artificial ligaments, artificial tendons, artificial nerves, artificial blood vessels formed of a material having a partial transparency and partial reflectance to ultrasound waves, and anechoic material surrounding said artificial tissues and artificial bone structure, and an artificial skin formed of an elastomeric layer of material enveloping the anechoic medium, the artificial tissues configured to be operated with surgical tools and provide haptic feedback simulating real tissues.

In an advantageous embodiment, the material forming the artificial skin comprises or consists of latex or silicone elastomer.

In an advantageous embodiment, the anechoic material comprises or consists of a hydrophilic colloid.

In an advantageous embodiment, the hydrophilic colloid is Agar Agar.

In an advantageous embodiment, the artificial bone structure comprises artificial bones made of a material comprising or consisting of a thermoplastic or thermosetting polymer.

In an advantageous embodiment, the artificial bone structure comprises artificial bones made of a material comprising or consisting of a biodegradable polymer such as polylactide (PLA).

In an advantageous embodiment, the artificial nerves and or artificial blood vessels comprise materials comprising or consisting of plant-based food derivatives for instance processed from cereals or rice or beans.

In an advantageous embodiment, the mannequin further comprises artificial subcutaneous/interstitial tissues formed of hypoechoic materials.

In an advantageous embodiment, the hypoechoic material comprises or consists of a hydrophilic colloid for instance Agar Agar.

In an advantageous embodiment, the mannequin further comprises artificial fat tissue the material of the fat tissue comprising or consisting of a cereal, rice or bean milled product, for instance wheat semolina.

In an advantageous embodiment, the artificial ligaments are made of a material comprising or consisting of polyester or cellulose, or both polyester and cellulose.

In an advantageous embodiment, the mannequin further comprises a support structure on which the artificial bone structure is fixed or integrally formed with, the support structure comprising elements configured for anchoring artificial ligaments and optionally any one or more of artificial nerves, artificial blood vessels and artificial tendons assembled to the artificial bone structure.

In an embodiment, the mannequin is a hand mannequin.

Further objects and advantageous aspects of the invention will be apparent from the claims, and from the following detailed description and accompanying figures.

### Brief description of the drawings

**Figure 1a** and **1b** are schematic perspective views of an artificial bone structure on a base wall of a support, of a hand mannequin according to an embodiment of the invention;
**Figures 2a** and **2b** are schematic perspective views of a base of the support for producing a hand mannequin according to an embodiment of the invention;
**Figure 3** is a schematic perspective view of a cover of the support with a negative imprint of a bottom side of a hand for producing a hand mannequin according to an embodiment of the invention;
**Figures 4a** to **4e** are schematic perspective views of the support and cover showing different steps in producing a hand mannequin according to an embodiment of the invention;
**Figures 5a** and **5b** are photographic views of the support and cover showing different steps in producing a prototype hand mannequin according to an embodiment of the invention;
**Figures 6a** and **6b** are photographic views of the support and cover showing further steps in producing a hand mannequin according to an embodiment of the invention;
**Figures 7a** and **7b** are photographic views of the manufactured prototype mannequin according to an embodiment of the invention, figure 7a showing the mannequin prior to training and figure 7b showing the hand mannequin with a section of artificial skin cut open.

### Detailed description of the invention

With reference to the figures, an example of a physical model of a body part 2 according to an embodiment of the invention will be described in more detail. For simplicity, we shall term herein the physical model of a body part as "mannequin". The mannequin that is illustrated is a hand mannequin intended for training ultrasound guided surgical procedures on the hand. Such surgical procedures may for instance include carpal tunnel surgery (release of transverse carpal ligament), trigger finger/thumb surgery (release of annular pulleys), de Quervain surgery (opening of first extensor compartment that can be subdivided into two subcompartments), Dupuytren surgery (release of retractile fibrous subcutaneous aponeurotic chords), percutaneous screw fixation or bone fixation removal, and/or percutaneous treatment of dorsal or palmar wrist or hand ganglion (non limitative list).

For good training of ultrasound guided surgical procedures, two factors are important. The first is the correct echogenicity properties of the materials forming the mannequin in at least the portions of mannequin that are relevant or of interest for the surgical procedures. The second are the properties of cutting (e.g. with a scalpel), perforating (e.g. with a needle) and resistance to the movement of the surgical tools to provide accurate realistic haptic feedback to the trainee during invasive procedures, such properties being provided at least over the portion of the mannequin engaged by the surgical tools.

The geometry of the anatomical structures forming the mannequin may be obtained by computer tomography (CT) scans, magnetic resonance imaging (MRI) or other *per se* known scanning techniques used for modelling body parts in three dimensions.

The artificial anatomical structures of the mannequin includes a skin model 6, a bone structure model 8, a nerve model 10, a blood vessel model 12, a ligament model 14, a tendon model 16, a muscle tissue model, a fat tissue model 18 and a subcutaneous / interstitial tissue model 20. Artificial anatomical structures may further include pathological models such as a tumor model and a ganglion model. It may be noted that not all of the above models are necessarily present in a mannequin, this depending on the location of the body part and the specific surgical procedures to be carried out. The surgical training system will further comprise an ultrasound system with an ultrasound probe and a computing station with a display connected to the ultrasound probe. The trainee manipulates an invasive medical tool, in particular a percutaneous medical tool that the trainee guides in the mannequin using the ultrasound system.

The system for producing the mannequin may include a manufacturing system that receives a digital anatomy model from a computing system, obtained for instance by a scan of a body part on a physical person.

The mannequin may be a free standing portion of a body part or may comprise a support structure 4 on which the anatomical structures are mounted. The support structure 4 may serve as a support for handling of the anatomical structures during the manufacturing process. The support structure may also provide a protective function for the anatomical structures during transport, handling, and storage.

In the illustrated embodiment, the support structure comprises a base wall 4a that may be inserted / mounted in a base 4b, for instance in the form of an open box, and optionally a cover 4c, it being understood however that any other support structure shapes may be provided depending on how it is intended to handle, transport and store the mannequin as well as the manner in which the mannequin is used and supported during the training operation, whereby the support structure is configured to allow access by the trainee in simulated realistic conditions.

### Representation of the bones

The bone structure model 8 replicates the 3D geometry of real bones, comprises or consists of, at least for the surface of the artificial bones, a material reflecting ultrasound in a similar manner to the ultrasound reflection properties of real bones. As the ultrasound frequencies and amplitudes useful for soft tissue examination do not penetrate real bones in any significant manner, and as the ultrasounds are mainly reflected, only the external surface portion of the artificial bones intended to face the ultrasound probe need to be represented. The portions of bone structure not intended to reflect ultrasound may be made of various materials without regard to their echogenicity properties, and for instance supported on a flat stable basis, possibly in a box facilitating moulding of the materials representing the other tissues.

Several materials are convenient to represent the bones, in particular various polymers (e.g Polylactic acid (PLA), Thermoplastic polyurethane (TPU), Polyethylene terephthalate glycol (PETG) that can be use in 3D printing or short glass fibre reinforced (SGFR) epoxy resin that can be moulded). In an advantageous embodiment, a biodegradable polymer such as polylactide (PLA) may be used to make the artificial bones. PLA provides the advantage of being recyclable and well adapted for additive manufacturing, if this mode of production is chosen. In bone structure models made of several adjacent artificial bones, they can be conveniently fused if this facilitates the general stability of the model. Articular spaces can be simulated by valleys, during the production of the simulated bone structure. As an alternative to additive manufacturing, injection moulding of a plastic or biodegradable material is a fabrication option adapted to big quantities.

### Representation of peripheral nerves or spinal cord

A tubular shape of material is provided, the material behaving echogenicity properties that moderately reflect the ultrasound, allowing a sonographic image resembling the honeycomb fascicular structure in transverse and longitudinal nerve views. Materials selected moderately reflecting ultrasound include plant based food derivatives with a controlled humidity. For instance, the materials for nerves may be derived from flour of wheat (protein: 10-13% carbohydrate: 60-70%, fat: 1-2%, fibers: 2-3%), rice (protein: 2-3%, carbohydrate: 25-35%, fat: 0,5-1%, fibers: 0,7%) or mung bean (protein: 0,5%, carbohydrate: 80-85%, fat: 0,5%). Cereals or rice processed derivatives that may for instance be obtained from the food industry are biodegradable and allow a good representation of neural structures.

Conservation of the mannequin containing biodegradable materials such as food derivatives may be extended with the addition of salt or antiseptics, or as an alternative or in addition, the mannequin may be stored in a packaging filled with a neutral gas such as nitrogen, and/or the mannequin may be stored in a fridge or deep freezer.

### Representation of blood vessels

Plant based food derivatives similar to the materials used for nerves may also be advantageously used to represent blood vessels, the material formed into tubular shapes replicating the geometry of real blood vessels. For instance hollow pasta with a controlled humidity to provide suppleness may be filled by a coloured liquid, allowing the trainee to carry out a dissection, at the end of the sonoguided procedure, to verify if the artery or vein is intact or has been injured during the procedure.

The training system may comprise a pump connected to the artificial blood vessels causing flow of the liquid in the artificial blood vessels to simulate under sonography the flow of blood within the vessels.

### Representation of ligaments

The artificial ligament should be securely fixed to the bone structure to avoid displacement during a surgical cutting operation, and needs to be visible under sonography by partially reflecting some ultrasounds and allowing some ultrasounds to pass through, to be able to see the deeper structures such as nerves or tendons situated under the ligament. For training operations involving the cutting of the ligament, the severability of the material when cut by a surgical instrument should replicate that of real ligaments for accurate haptic feedback. Advantageous materials that may be used as ligaments include bands of cellulose and polyester that have semi-elastic properties. The artificial ligaments may be securely attached to the artificial bones through holes 5 provided in the base wall 4a of the support with a knot of the artificial ligament on the opposite side. Various mechanical clamping mechanisms or adhesives may also be used to securely fix the ligaments to the bone structure.

### Representation of muscles

Artificial muscles may advantageously be formed from a material comprising a hydrophilic colloid such as Agar Agar (protein: 0,4% carbohydrate: 0,1%, fat: 0,1%, fibers: 86,4%), water 1,3% (1,3g/L of water)) . Gelatine (e.g. containing 160 g/L of water) may be an alternative option supplemented with an echogenic powder (e.g. sugar free Metamucil (Brand Psylium hydrophilic mucocilloid fiber e.g. containing 80g/L of water)), to adjust the echogenicity of the material. Other possible materials for forming the artificial muscles include latex (e.g. Latex: 33%, water: 66%, ammoniac: 0,3%) and alginates (e.g. derived from brown algae macrocystis pyrifera and ascophyllum nodosum).

### Representation of subcutaneous/interstitial tissues

Artificial subcutaneous/interstitial tissues should be formed of hypo-echoic materials. There is often no need to simulate the normal connective tissue septa like normal subcutaneous tissue. The material of the artificial subcutaneous/interstitial tissues may advantageously comprise or consist of a hydrophilic gel, for instance a hydrophilic colloid such as Agar Agar, a polysaccharide. Agar Agar is an advantageous material choice, as it is hypo-echoic, it is relatively resistant to pressure, it offers limited resistance when a perforating instrument is introduced in it, and, after retrieval of the instrument, it reforms without an echogenic trace nor gas bubbles or plane of rupture, which would generate sonographic artefacts. Finally, it allows injection of a liquid with quick diffusing of this liquid, quite similar to what happens in real medical injections.

### Representation of fat tissue

Fat tissue layer may be represented by materials similar to those used for the interstitial tissues or for instance wheat semolina (e.g. containing protein: 13%, carbohydrate: 66%, fat: 2,3%, fibers: 7%) as a layer spread underneath the elastomeric skin sheath.

### Representation of skin

The artificial subcutaneous/interstitial tissue material needs to be contained by an artificial skin which forms an envelope. This artificial skin, beside enveloping the hydrophilic gel, is helpful in the surgical simulation as it provides haptic feedback to the trainee, replicating the sensation of perforating or cutting the skin. The artificial skin may advantageously comprise or consist of an elastomer such as a film or sheath of latex or of a silicone elastomer.

The present invention provides a mannequin replicating the region of anatomical interest (such as a hand, a limb, a trunk, a neck) and possessing physical and echogenic properties allowing teaching of ultrasound-guided medical acts. Models can also be developed for animals, to be used for example in veterinary medicine. To achieve this, different materials or composition of materials to simulate the different tissues that need to be represented are arranged together by various possible manufacturing techniques to correspond in shape and volume to the normal (or pathological) anatomy of the region of interest. Each material is selected to provide echogenicity properties mimicking as close as possible the tissue it represents. Some of these materials are configured to allow the introduction of a medical instrument, like a needle, a cutting device, a clamp or another tool, with the following characteristics, that can be modulated to each clinical situation simulated : (1) resistance to the introduction and displacement of the medical instrument, resembling the *in vivo* resistance to the instrument; (2) no specific sonographic artefact, other than the artefact generated by the instrument itself ; (3) no trace of the passage of the instrument, upon retrieving the instrument ; (4) no breakage of the material related to the passage of the instrument, allowing for example the formation of bubbles or plane of cracks. Some of the selected materials are designed to be cut, simulating biological ligament structures that need to be released, with a resistance to the act of cutting, similar to the simulated ligament, and without dislodging the ligament from its anchorage to the rest of the model under the force of the manipulation.

The mannequin is preferably also configured to be dissectible, so that the trainee can verify if the simulated operation has been completed.

A mannequin according to embodiments of the invention may be ecologically friendly, by the use of recyclable or biodegradable materials for many materials, as well as being economical.

As ultrasound-guided medical acts are performed through a localized area of skin that makes sense medically, the mannequin may represents only a portion of the anatomical region to be studied ; the other portions can be of simple shapes and materials, allowing for instance to conveniently dispose the mannequin in a stable way on a surface such as a table surface, during sonoguided simulated procedures.

### Example of a manufacturing process of a hand mannequin

The illustrated example has been implemented for production of prototypes, it being understood that for larger volumes in industrial processes, various steps may be replaced by manufacturing techniques better adapted for automation, such as additive and subtractive manufacturing techniques, robotic assembly of components, injection moulding and so on.

In the following example as illustrated in the figures, the support 4 comprises an open box 4b that contains a base wall insert 4a on which the artificial bone structure 8 is supported. The base wall comprises holes 5 allowing to fix the artificial ligaments 14. A cover or top wall 4c having a negative profile 7 of the outer surface of the body part (in this example the hand lower surface) corresponds to the surface of the simulated skin in negative, to serve for moulding the skin made with a layer of artificial skin material. The box and cover parts 4b, 4c and the bone structure 8 may advantageously be made by additive manufacturing or by injection moulding.

It is possible to deposit a layer of artificial skin material such as liquid latex or silicone elastomer on the cover to form the layer of artificial skin of the mannequin.

After fixing the artificial ligaments, assembling manually the tissues representing the nerves and blood vessels, and pouring heated liquid Agar-Agar, the cover may be closed over the open box. After cooling, the Agar Agar forms a gel, covered by the latex or silicone skin, containing the simulated nerves, vessels, muscles and bony structures.

The cover 4c on the box 4b may be kept closed until the training exercise. If needed, it can be sealed and irradiated for sterilization to be conserved for a long period.

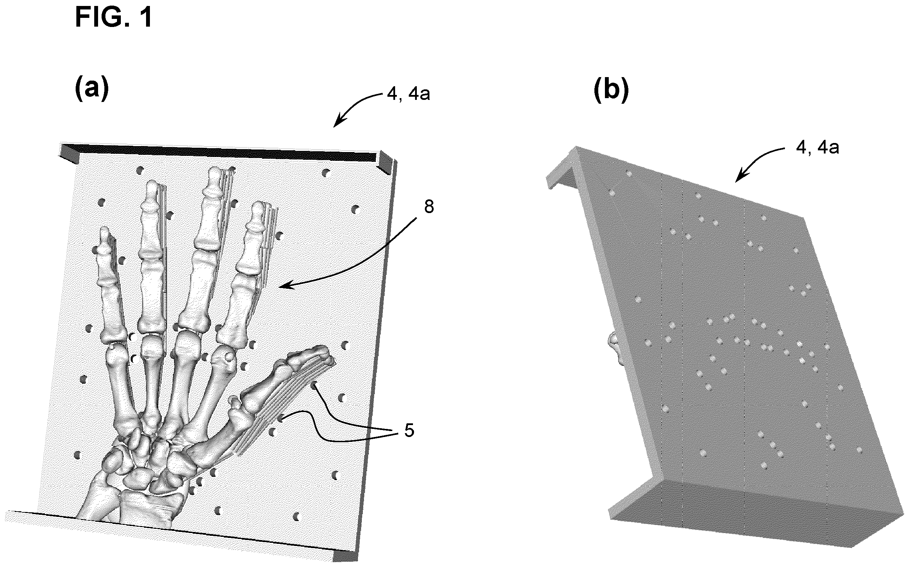

Figure 1 illustrates a production step of a prototype hand mannequin where the artificial bones are set on a perforated support that allows passing of sutures or other fixation devices intended for attachment of artificial anatomical structures such as ligaments, tendons, and blood vessels.

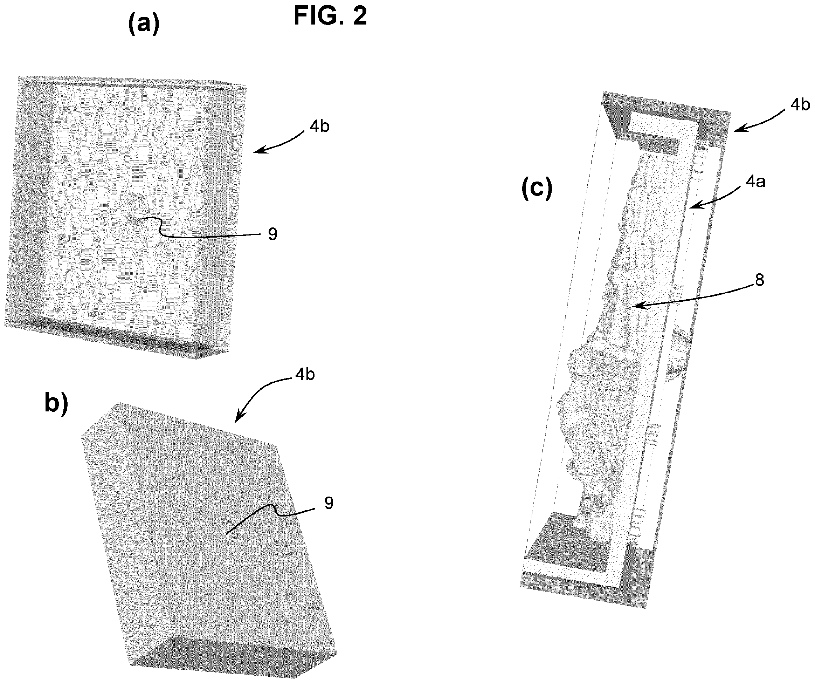

Figure 2 illustrates a production step of a cover for the manufacturing of the prototype hand mannequin, where the cover 4c is configured to be placed over the open box 4b forming the support to inject / mold an anechoic medium replicating the tissues surrounding the artificial bones, ligaments, tendons and blood vessels. The cover or base comprises an orifice vent 9 to let air bubbles escape during the molding process.

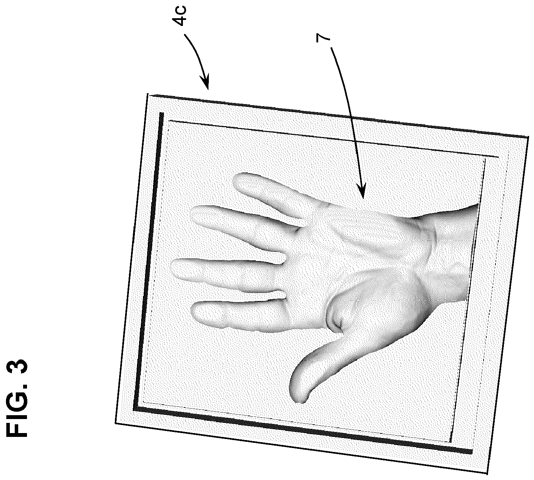

Figure 3 illustrates a production step of a cover for the manufacturing of the prototype hand mannequin, where the cover 4c comprises on its inner side a negative imprint 7 of the hand outer profile to mould the artificial tissue formed around the artificial bones, ligaments, tendons and blood vessels, whereby a layer of artificial skin material may be coated or otherwise placed or formed on the negative imprint 7 to create the artificial skin layer.

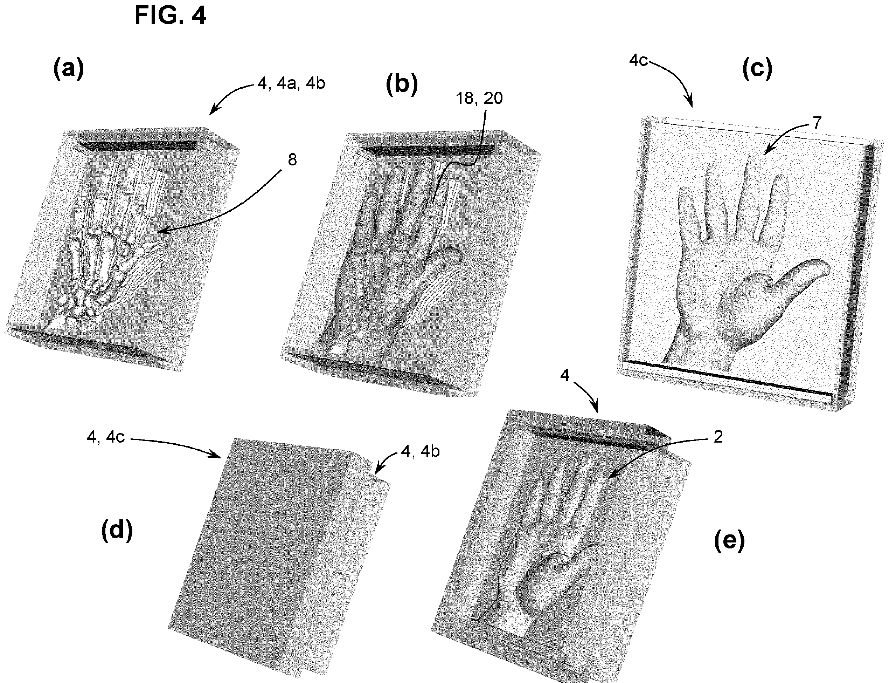

Figure 4 illustrates steps of the manufacturing of the prototype hand mannequin, showing 3D models representing the main tissues that are found in the hand mannequin: (A) Artificial bones (B) Artificial anechoic medium, (C) Artificial skin, (D) The cover, (E) The cover closed over the support, showing with transparency of the cover the hand mannequin position therein.

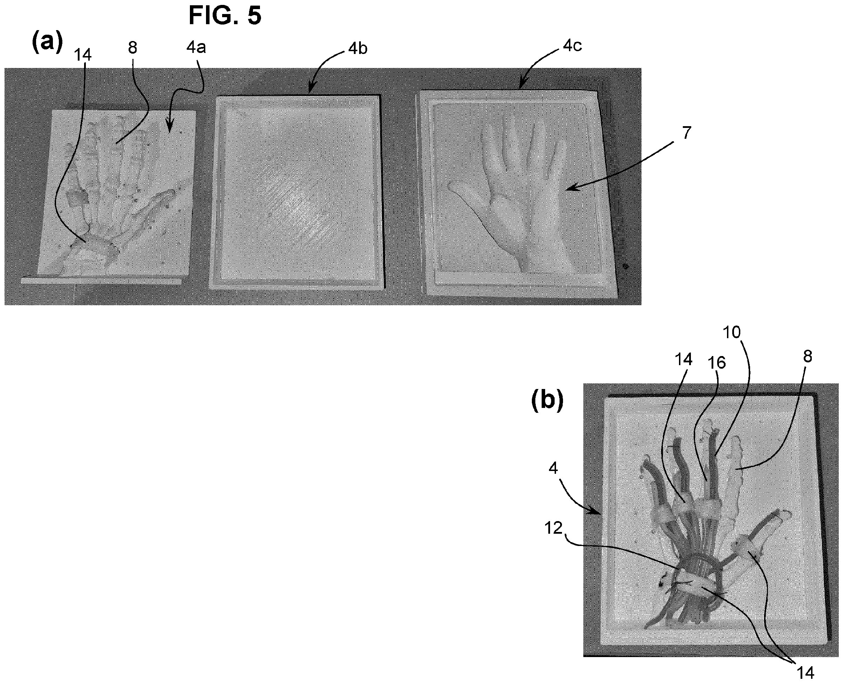

Figure 5 illustrates steps of the manufacturing of the prototype hand mannequin, showing:
   (A) the artificial bone structure on a support, formed by 3D printing;
   (B) artificial ligaments, tendons, nerves and optionally blood vessels assembled on the artificial bone structure, whereby in this example the tendons as well as arteries are made of coloured gelatin tubes (e.g. beef or pork gelatin but this substance may be replaced by plant based food derived from flours of cereals, grains or beans for instance of wheat (protein: 10-13% carbohydrate: 60-70%, fat: 1-2%, fibers: 2-3%), rice (protein: 2-3% carbohydrate: 25-35%, fat: 0,5-1%) or mung bean (protein: 0,5%, carbohydrate: 80-85%, fat: 0,5%, fibers: 0,7%) while a synthetic ribbon of cellulose and polyester is attached to mimic the ligaments to be cut;
   (C) after moulding of the anechoic middle (Agar Agar), a latex skin is placed over the hardened Agar Agar shape.

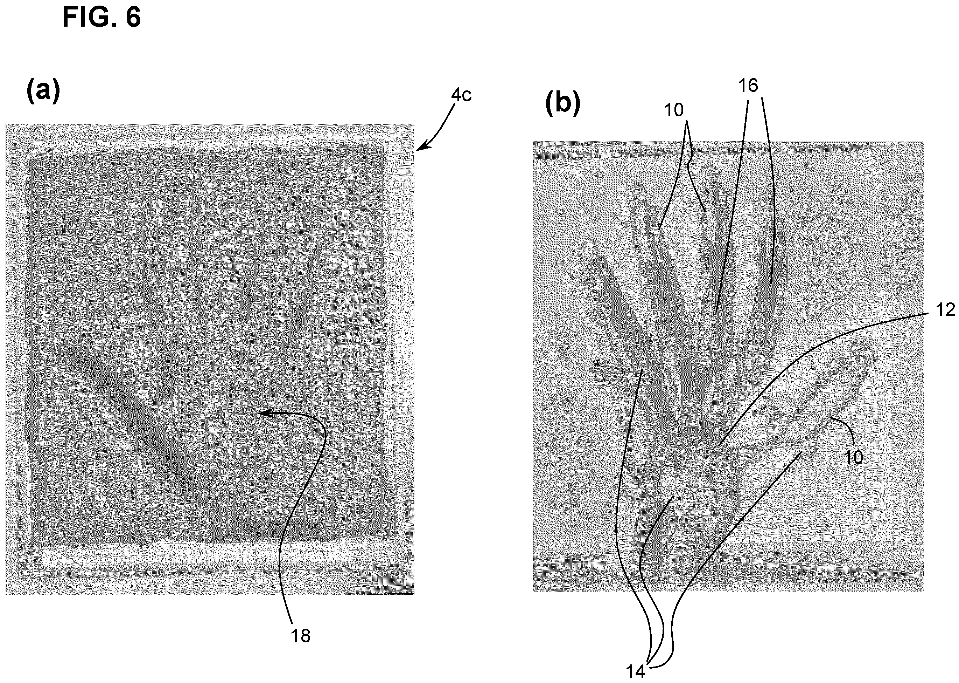

Figure 6 illustrates steps of the manufacturing of the prototype hand mannequin, showing the use of a soft material, in this example derived from wheat semolina, to mimic fat tissue underneath the skin, whereby figure 6a illustrates the artificial fat tissue placed of the inside of the artificial skin layer formed on the negative imprint and figure 6b shows the artificial bone structure with tendons and nerves assembled thereon. Here the artery arch is mimicked by a tube made of wheat semolina. The artificial ligaments configured to be cut during training are made from synthetic ribbon of cellulose and polyester selected to give a close to real haptic sensation during the cutting process while also giving a very adequate sonographic view.

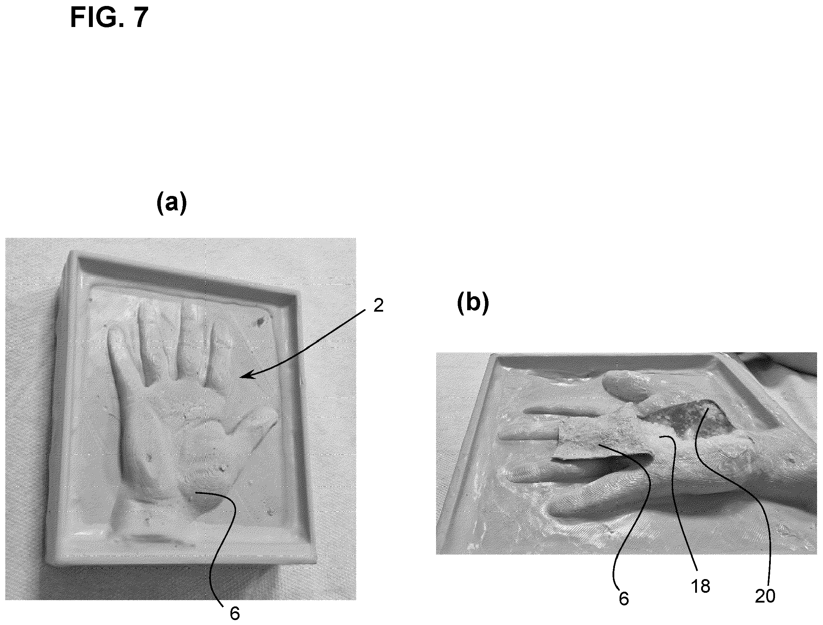

Figure 7a illustrates the finished prototype hand mannequin, whereby after moulding of the anechoic middle, the latex or elastomer skin aspect may be modified by the additional deposition of artificial fat tissue, for instance in this example wheat semolina, alternatively silicone layer underneath the latex sheath can be used. This aspect may be confirmed when the trainee cuts open the artificial skin (figure 7b) to assess the completeness of the ligament release performed and the absence of other tissue damaged involuntarily.

### List of feature references:

Mannequin (physical model of a body part) 2
   Support 4
      Base wall 4a
         Hole 5
      Base 4b
         Vent 9
      Cover 4c
         Anatomy structure negative imprint 7
   Artificial anatomical structures
      Skin model 6
      Bone structure model 8
         Artificial bone model
      Nerve model 10
      Blood Vessel model 12
      Ligament model 14
      Tendon model 16
      Muscle tissue model
      Fat tissue model 18
      Subcutaneous / interstitial tissue model 20
      Pathological site models
         Tumor model
         Ganglion model
Ultrasound system
   Ultrasound probe
   Computing station and display
Invasive medical tool
   Percutaneous medical tool
Production system
   Computing system
      Digital anatomy model
   Manufacturing system
      Additive manufacturing system

## Claims

1. A mannequin for ultrasound guided surgical training, comprising an artificial bone structure comprising a surface portion reflecting ultrasound waves, artificial tissues comprising any one or more of artificial ligaments, artificial tendons, artificial nerves, artificial blood vessels formed of a material having a partial transparency and partial reflectance to ultrasound waves, and anechoic material surrounding said artificial tissues and artificial bone structure, and an artificial skin formed of an elastomeric layer of material enveloping the anechoic medium.

2. The mannequin of claim 1 wherein the material forming the artificial skin comprises or consists of latex or silicone elastomer.

3. The mannequin of any preceding claim wherein the anechoic material comprises or consists of a hydrophilic colloid.

4. The mannequin of the preceding claim wherein the hydrophilic colloid is Agar Agar.

5. The mannequin of any preceding claim wherein the artificial bone structure comprises artificial bones made of a material comprising or consisting of a thermoplastic or thermosetting polymer.

6. The mannequin of any preceding claim wherein the artificial bone structure comprises artificial bones made of a material comprising or consisting of a biodegradable polymer such as polylactide (PLA).

7. The mannequin of any preceding claim wherein the artificial nerves and or artificial blood vessels comprise materials comprising or consisting of plant-based food derivatives for instance processed from cereals or rice.

8. The mannequin of any preceding claim further comprising artificial subcutaneous/interstitial tissues formed of hypoechoic materials.

9. The mannequin of the preceding claim wherein the hypoechoic material comprises or consists of a hydrophilic colloid for instance Agar Agar.

10. The mannequin of any preceding claim further comprising artificial fat tissue the material of the fat tissue comprising or consisting of a cereal, rice or bean milled product, for instance wheat semolina.

11. The mannequin of any preceding claim wherein the artificial ligaments are made of a material comprising or consisting of polyester or cellulose, or both polyester and cellulose.

12. The mannequin of any preceding claim further comprising a support structure on which the artificial bone structure is fixed or integrally formed with, the support structure comprising elements configured for anchoring artificial ligaments and optionally any one or more of artificial nerves, artificial blood vessels and artificial tendons assembled to the artificial bone structure.

13. The mannequin of any preceding claim in the form of an artificial hand.
